# EUROPEAN PATENT APPLICATION

(11) **EP 4 277 303 A1**
(43) Date of publication of application: **15.11.2023**
(21) Application number: 23171805.7
(22) Date of filing: 05.05.2023
(51) Int. Cl.: H04W 4/02, H04B 17/318, H04W 4/40, H04W 4/029, G01C 21/34, H04W 24/04

(54) **COMMUNICATION MONITORING SYSTEM**

(30) Priority: 09.05.2022 US 202263339729 P; 17.04.2023 US 202318301806
(71) Applicant: Transportation IP Holdings, LLC, Norwalk, CT 06851 (US)
(72) Inventor: Swar, Padam Dhoj, Norwalk, CT, 06851 (US); Craven, Stephen, Norwalk, CT, 06851 (US)
(74) Representative: Laufhütte, Dieter

(57) **Abstract**

A method of communication monitoring. The method may include receiving wireless communication signal strengths measured in different areas from one or more communication devices disposed onboard a first system moving through the different areas or stationary communication devices at wayside locations in the different areas. The method may include receiving locations where the wireless communication signal strengths were measured. The method may then include determining a spatial distribution of the wireless communication signal strengths based on values of the wireless communication signal strengths that were measured and the locations where the wireless communication signal strengths were measured. The method may include changing operation of a second system based on the spatial distribution that may be determined.

## Description

### CROSS-REFERENCE TO RELATED APPLICATIONS

This application claims priority to U.S. Provisional Application No. 63/339,729, filed on May 9, 2022, the entire disclosure of which is incorporated herein by reference.

### BACKGROUND

### Technical Field.

Embodiments of the present disclosure relate to a communication monitoring system and a method of monitoring a communication system.

### Discussion of Art.

Communication among systems may be useful to ensure the coordination of various functions of the systems individually and collectively. With regard to vehicle systems, the functions may relate to braking system, propulsion systems, navigational or directional systems, and the like. Effective and predicable communication may be important for the functioning of these systems. Existing communication monitoring system may focus on past communication conditions with limited inputs capable of providing a predictive picture of the communication landscape. It may be desirable to have a system and method that differs from those that are currently available.

### BRIEF DESCRIPTION

In accordance with one example or aspect, a method is provided that includes receiving wireless communication signal strengths measured in different areas from one or more communication devices disposed onboard a first system moving through the different areas or stationary communication devices at wayside locations in the different areas. The method includes receiving locations where the wireless communication signal strengths were measured and determining a spatial distribution of the wireless communication signal strengths that were measured and the locations where the wireless communication signal strengths were measured. The method includes changing operation of at least a second system based on the spatial distribution that is determined.

In accordance with one example or aspect, a system is provided that may include a controller. The controller may receive wireless communication signal strengths measured in different areas. The signal strengths may be measured from a first communication device disposed onboard a first vehicle system while the first vehicle system is moving through different areas or measured by stationary communication devices at wayside locations in the different areas. The controller may receive locations where the wireless communication signal strengths were measured and may determine a spatial distribution of the wireless communication signal strengths based on values of the wireless communication signal strengths that were measured and the locations where the wireless communication signal strengths were measured. The controller may change operation of a second vehicle system based on the spatial distribution that may be determined.

In one embodiment, a method is provided that may include receiving wireless communication signal strengths measured in different areas from one or more communication devices disposed onboard a first vehicle system moving through the different areas or stationary communication devices at wayside locations in the different areas. The method may include receiving locations where the wireless communication signal strengths were measured. The method may include determining a spatial distribution of the wireless communication signal strengths based on values of the wireless communication signal strengths that were measured and the locations where the wireless communication signal strengths were measured. The method may include changing operation of a second vehicle system based on the spatial distribution that may be determined.

### BRIEF DESCRIPTION OF THE DRAWINGS

The subject matter may be understood from reading the following description of non-limiting embodiments, with reference to the attached drawings, wherein below:
Figure 1 shows a schematic overview of one example of a communication monitoring system;
Figure 2 shows another schematic overview of one example of a communication monitoring system; and
Figure 3 shows a flowchart of one example of a communication monitoring method.

### DETAILED DESCRIPTION

Embodiments of the subject matter described herein may relate to a communication monitoring system and a method thereof. For systems to wirelessly communicate, there may need to be sufficient signal strength to transmit and receive communications. Signal strength can be evaluated by measuring one or more characteristics of the signals, such as a radio receive signal strength indication, an ambient noise floor level, a number of repeated wireless messages needed to successfully communicate information, a number of repeated uses of wireless communication repeaters needed to successfully communicate information, or the like. For systems, such as vehicle systems, it may be useful to track or map signal strengths along a given route, especially where a route may be used by multiple vehicle systems, to determine areas where signal strengths are routinely too weak for communication or pose a risk for communication loss. Moreover, tracking or mapping these signals strengths can help identify locations where signal augmentation devices (such as signal repeaters) may be needed.

A controller may be included with the vehicle systems to receive the characteristics of the signals along with a location at which the characteristics of the signals were measured. Based on the characteristics of the signals and the locations, the controller may create a map or spatial distribution showing the different signal strengths in different areas. This may be beneficial for vehicle systems travelling along the route to plan the trip of the vehicle system, to plan communications, and various operational characteristics of the vehicle system along the route.

While one or more embodiments are described in connection with a rail vehicle system, not all embodiments are limited to rail vehicle systems. Unless expressly disclaimed or stated otherwise, the subject matter described herein extends to other types of vehicle systems, such as automobiles, trucks (with or without trailers), buses, marine vessels, aircraft, mining vehicles, agricultural vehicles, or other off-highway vehicles. The vehicle systems described herein (rail vehicle systems or other vehicle systems that do not travel on rails or tracks) may be formed from a single vehicle or multiple vehicles. With respect to multi-vehicle systems, the vehicles may be mechanically coupled with each other (e.g., by couplers) or logically coupled but not mechanically coupled. For example, vehicles may be logically but not mechanically coupled when the separate vehicles communicate with each other to coordinate movements of the vehicles with each other so that the vehicles travel together (e.g., as a convoy).

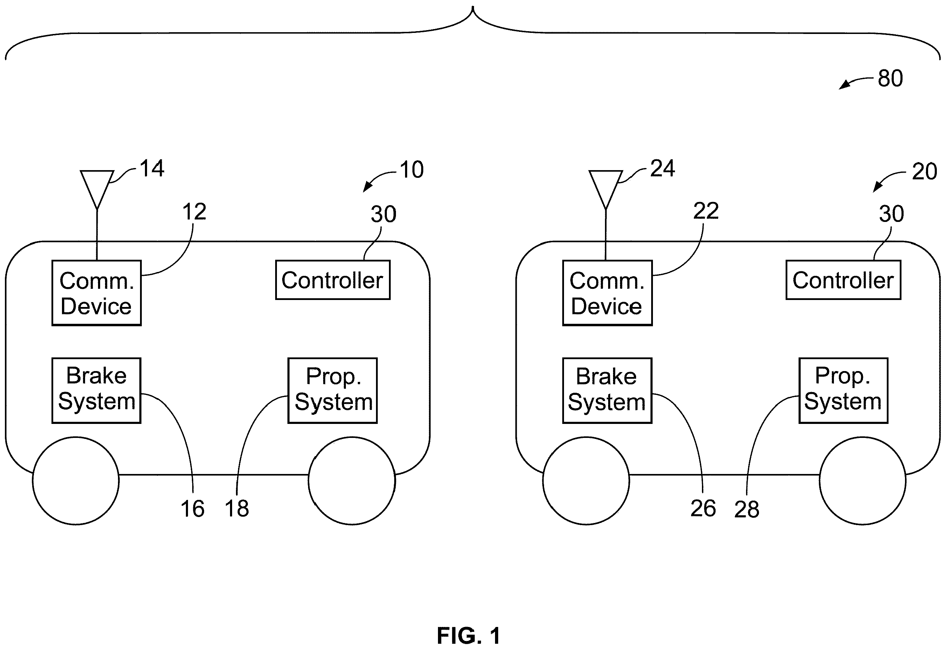

Figure 1 illustrates one embodiment of a communication monitoring system 80. The communication monitoring system may include a first vehicle system 10 and a second vehicle system 20. Each vehicle system may include a communication device 12, 22; a controller 30; a brake system 16, 26; and a propulsion system 18, 28. The controller may include microcontrollers, processors, microprocessors, or other logic devices that operate based on instructions stored on a tangible and non-transitory computer readable storage medium, such as software applications stored on a memory.

The communication devices may communicate with each other, other systems, and/or remote locations that may be off-board the vehicle systems. The first and second vehicles systems may include the controller, the brake system, the propulsion system, or the like. The communication device may include or represent an antenna 14, 24 (along with associated transceiver hardware circuitry and/or software applications) for wirelessly communicating with other systems and/or remote locations. The communication devices may include radio or satellite transceivers, modems, routers, and the like, to electrically transmit data signals to and/or receive data signals from the controller. The communication devices can communicate the data signals as discrete data packages that include blocks of data that may be individually communicated with the controller. For example, the communication devices can transmit and receive data packets using one or more of the Transmission Control Protocol (TCP), Internet Protocol (IP), User Datagram Protocol (UDP), or Internet Control Message Protocol (ICMP). However, other protocols may be used.

The controllers onboard the vehicle systems may determine wireless signal characteristics received by the communication devices. These signal characteristics can be referred to as communication data. In one example, the communication data may be measured by one or more sensors and reported to the controller. In another example, the communication data may be characteristics of the information being communicated. The communication data may include indications of whether a given communication channel may be busy, radio receive signal strength indicators (RSSI), cellular data signal strength indicators , Wi-Fi signal strength indicators, Bluetooth signal strength indicators, ambient noise floor levels that may indicate a background or reference noise or signal level, whether messages are repeatedly being sent without being received, whether repeaters are being used to successfully communicate the information, or the like. The RSSI and other signal strength indicators may measure the amount of power a signal. The amount of power present in the signal may be an approximate value for signal strength received by a receiving antenna. Communication data also can be evaluated based on time of day, ambient weather, network congestion, grid power availability, and the like. Based at least in part on this aspect, a route section may be rated higher communication quality/reliability during one period than during another period.

The first communication device may send the signal characteristics, along with a geographical location at which the signal characteristics were measured, to the controller. For example, the communication device may measure the strength of the received signal as the RSSI. As another example, the communication device may measure the noise in the signal or the noise that may be detected by the antenna during times that a signal may not be received as the ambient noise floor level. As another example, the communication device may measure the number of messages that are being repeatedly sent before the messages may be received. The communication device, for example the controller, may measure or count the number of messages sent before the message may be received. The communication device may store the number of messages sent before the message may be received. Where a message may need to be sent multiple times to successfully communicate the information, the communication device may use a repeater to communicate the signals. The communication device may measure when repeaters are being used to communicate signals. The communication device may incorporate the use of repeaters as an input to determine the communication signal strength.

The geographical location may be obtained by the controller via a Global Navigation Satellite System (GNSS) receiver (such as a global positioning system (GPS) receiver), a wireless triangulation system, operator input, a dead reckoning system, a route database, communication with transponders along the route, or the like. It may be useful to track the communication signal strength with the geographical location obtained to track where communication signal strength may vary along a given trip. Based on the wireless signal characteristics and the location that the wireless signal characteristics were measured, the controller may determine a spatial distribution of wireless signal strength. For example, where the RSSI may indicate a strong signal and no repeater may be needed to successfully communicate information, the wireless signal strength may be determined to be strong. Where the RSSI may indicate a weak signal strength and one or more repeaters may be needed to repeat messages to successfully communicate information, the wireless signal strength may be determined to be weak.

The spatial distribution of the wireless signal strength may be in the form of a map (such as a heat map), a chart, a table, a graph, or the like, that associates different locations, geographic coordinates, two-dimensional locations (e.g., longitude and latitude), three-dimensional locations (e.g., longitude, latitude, and altitude), or the like, with different signal strengths. The spatial distribution may be used to quickly identify the wireless signal characteristics or the wireless signal strength at a given location. For example, the spatial distribution may indicate a weak expected signal strength for an upcoming portion of a trip, or may indicate a strong expected signal strength for another upcoming portion of the trip, based on the received inputs. One objective of determining the spatial distribution of the wireless signal strength may be to analyze the different locations and the wireless signal characteristics measured at those locations to determine an overview of the wireless signal strengths. The overview of the wireless signal strengths may provide an easily identifiable summary of wireless signal strengths along or near a given area or route. The overview of the wireless signal strengths may allow an operator or controller to review a trip plan or route for a given trip to see the expected wireless signal strengths along the route of the given trip. As discussed further below, the overview of the wireless signal strength may be in the form of a heat map or graph that may allow quick identification of the signal strengths of the route.

The spatial distribution may be determined based on the measurements from a single vehicle system. Said another way, the controller may track the determined signal strengths along the path of a single vehicle system. The single vehicle system may them be able to use the tracked determined signal strengths on future trips along or near the path. The spatial distribution may be determined based on multiple vehicle systems or the aggregate of multiple vehicle systems. Said another way, the controller may track the determined signal strengths of multiple vehicle systems travelling along one or more paths or routes. The determined signal strengths may then be used to create the spatial distribution of the signal strengths, which may then be used by the multiple vehicle systems. The spatial distribution may be determined using averages, medians, deviations, etc. of signal strengths at different locations from multiple vehicle systems over a given time period.

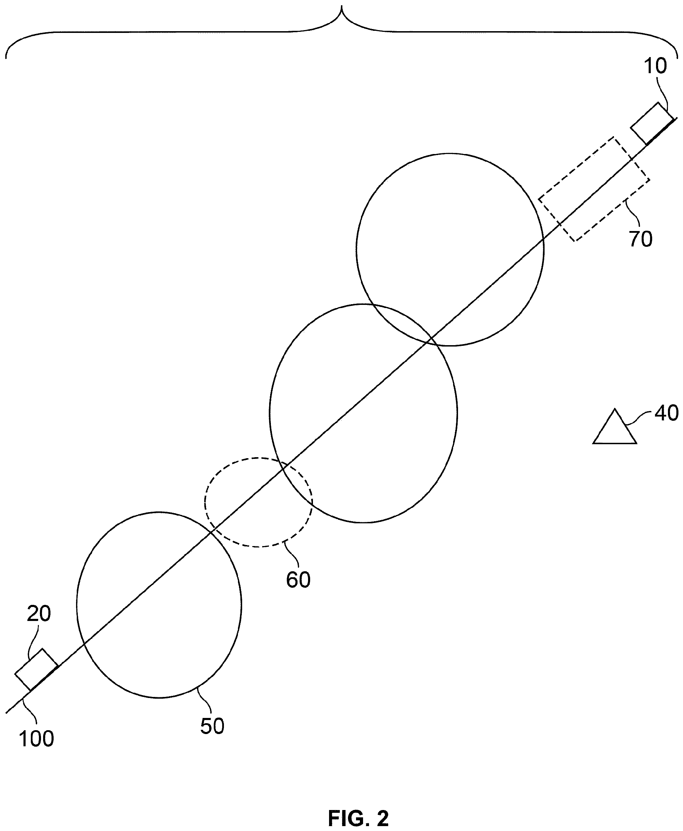

Figure 2 illustrates one example of a spatial distribution of the signal characteristics determined by the communication monitoring system shown in Figure 1. The spatial distribution of the signal characteristics may be shown as a communication heat map. The first vehicle system may be shown travelling along the route. As discussed, the first vehicle system and the first communication device can measure several inputs regarding the signal characteristics along the route and report these characteristics, as well as the location at which the signal characteristics were measured, to the controller.

In one embodiment, a stationary communication device 40 may be positioned at a wayside position. The stationary communication device may send current communication data to the controller. The controller may evaluate the communication data and the location data to create a spatial distribution of the signal strengths along a route. The controller may determine the spatial distribution of the signal characteristics as shown in Figure 2 based on the inputs from the first communication device and the stationary communication device. The spatial distribution of the signal characteristics may provide an overview of communication signal strength along a given route. For example, the spatial distribution of the signal characteristics may show where signal strength declines and for how long, as well as where signal strength may be lost all together. A suitable wayside position may be a crossing gate, for example. Other suitable wayside positions may include powered (grid-connected) structures, while other wayside positions may be powered with on-site power generation (e.g., solar array).

The spatial distribution of the signal characteristics may also show areas where signal strength may be expected to be fully operational. The signal strength may be expected to be fully operational when the signal strength may be determined to be above a predetermined threshold. The predetermined threshold may be determined based on one or more of the signal strength, communication speed, number of repeated messages needed to communicate information being below a given number, or the like. Where the signal strength may be determined to be below the predetermined threshold, the signal strength may have decreased operational capabilities. The decreased operational capabilities may include requiring more repeated messages in order to communicate information, decreased communication speed and/or reliability, or the like. The spatial distribution of the signal characteristics may be communicated to the second vehicle system. An operator of the second vehicle system may receive the spatial distribution of the signal characteristics and may adjust operation of the second vehicle system or communication based on the spatial distribution of the signal characteristics.

In the embodiment illustrated in Figure 2, the spatial distribution of the signal characteristics may show areas having a strong signal 50, such as by showing the areas bound by a solid line circle. The spatial distribution of the signal characteristics may show areas having a weak signal 60 by showing the areas bound by a dashed line circle. The spatial distribution of the signal characteristics may show areas having no signal 70 by showing a dashed line polygonal shape. These visual cues may allow the communication signal in a given area to be easily identifiable. In other embodiments, the different areas may be shown with different distinguishing factors such as: differing color gradients, differing three-dimensional contours, differing signals, and the like.

The spatial distribution of the signal characteristics may be communicated to the second communication device of the second vehicle system. The second vehicle system may then change operation based on the spatial distribution of the signal characteristics. The change in operation of the second vehicle system may be automatic or autonomous based on the spatial distribution of the signal characteristics received, or the change may be manually performed by an operator of the second vehicle system. The change in operation may include changing a pressure of the brake system onboard the second vehicle system, changing the propulsion system to reduce an upper limit on a moving speed of the second vehicle system, modifying the timing or mode of communication, or the like. The mode may be different types of wireless communication technologies, such as radio, cellular, satellite, infrared, Wi-Fi, Bluetooth, or the like. In one embodiment, the controller may send the information regarding the spatial distribution of the signal characteristics to the second vehicle system and an operator of the second vehicle system may receive the information on the second communication device. The operator may manually adjust operation of communication based on the received spatial distribution of the signal characteristics.

For example, the operator may direct the second communication device to store data measured during movement through areas with decreased levels of wireless communication signal strength. Said another way, in response to seeing an upcoming area with decreased levels of wireless communication signal strength or quality or reliability, the controller or operator may elect to store information related to the trip before entering the area with decreased communication signal strength. This ensures that the vehicle system does not get stuck without trip information in an area with limited or no signal strength. In one embodiment, the controller may respond to an upcoming area of decreased levels of wireless communication signal strength or quality or reliability by interacting with one or more aspect of a positive vehicle control system (such as the I-ETMS positive train control system available from Wabtec Corporation). The controller may switch operating modes of the vehicle system from a normal operating mode to a more conservative operating mode as the vehicle system approaches the communication impaired route segment.

The operator may direct the second communication device to delay communicating data that may be measured until the second vehicle system exits the areas associated with decreased levels of wireless communication signal strength. The communication may be delayed in the area of decreased signal strength to ensure that the communication reaches its end target, rather than being lost in the area with little or no communication signal strength. Once the second vehicle system exits the area of decreased signal strength, the communication may be sent.

In one embodiment, changing the operation of the second vehicle system includes changing which wireless communication modality may be used by the second vehicle system during movement within the areas with decreased levels of wireless communication signal strength relative to the wireless communication modality used by the second vehicle system during movement outside the areas associated with decreased levels of signal strength. The wireless communication modality may include a wireless communication frequency, a wireless communication channel, a wireless communication band, or the like. The wireless communication modality may be changed to find the strongest modality (signal/channel/band/etc.) through which to communicate.

In one embodiment, the controller may restrict travel or the types of vehicle systems that may travel on the route based on the wireless signal characteristics. For example, the controller may limit the moving speeds of the vehicle system along the route based on the wireless signal characteristics. The controller may restrict the permissible size of vehicle systems that may travel along the route based on the wireless signal characteristics. For example, where the signal strength along the route is weak for a prolonged area, the controller may restrict large vehicle systems from travelling along the route.

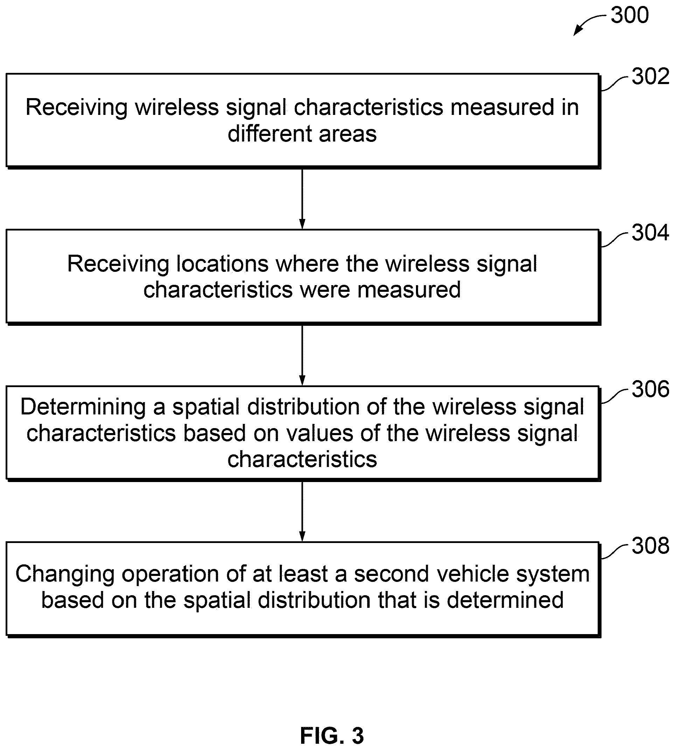

Figure 3 shows a communication monitoring method 300, according to one example. The method can represent operations performed by the controller of the communication monitoring system. At step 302, wireless signal characteristics may be measured or received. The wireless signal characteristics may be measured in the different areas along the route. The wireless signal characteristics may be determined by data such as whether a given communication channel is busy, radio receive signal strength indicators (RSSI), reference signal received power (RSRP), reference signal received quality (RSRQ), ambient noise floor levels, whether messages are repeatedly being sent to successfully communicate information, whether repeaters are being used to successfully communicate the signals, or the like. In one example, the wireless signal characteristics may be indicative of a cellular communication strength, a radio communication strength, a Wi-Fi communication strength, or the like. A communication device may send the signal characteristics to the controller.

At step 304, locations where the wireless signal characteristics were measured may be received. The locations may be obtained based on a past or present location reading where the signal was measured, from a GNSS receiver (such as a GPS receiver), a wireless triangulation system, operator input, a dead reckoning system, a route database, communication with transponders along the route, or the like. It may be useful to track the communication signal strength with the geographical location obtained to track where communication signal strength may vary along a given trip..

At step 306, a spatial distribution of the wireless signal characteristics may be determined based on values of the wireless signal characteristics. The spatial distribution of the wireless signal characteristics may be considered a communication heat map such that an operator or observer may be able to determine communication signal strength based on viewing the heat map. In other example, the spatial distribution may include a chart, a table, a graph, or the like, that associates different locations, geographic coordinates, two-dimensional locations (e.g., longitude and latitude), three-dimensional locations (e.g., longitude, latitude, and altitude), or the like, with different signal strengths. The spatial distribution may be used to quickly identify the wireless signal characteristics or the wireless signal strength at a given location.

At step 308, operation of at least a second vehicle system may be changed based on the spatial distribution that may be determined. For example, the second vehicle may download instructions prior to entering an area with decreased wireless communication signal or the second vehicle may operate at a lower speed prior to entering an area with decreased wireless communication signal. In another example, the second vehicle system may operate at a planned speed prior to entering an area with strong wireless communication signal.

As discussed above, the communication heat map may be created using the inputs from the first vehicle system. However, the communication devices of subsequent vehicle systems, such as the second communication device of the second vehicle system, a third communication device of a third vehicle system, and so on, all may report inputs and locations at which the inputs were measured to the controller. In one example, an input and location may be received from an end of train (EOT) position and compared to an input and location received from a head of train (HOT) position. This information may be used to determine if the EOT to HOT communications may be compromised. In one embodiment, instrument packages installed on railcars of a train may be used to capture inputs and locations. In another embodiment, plural vehicle types having communication devices may provide inputs and locations for heat map generation. In another embodiment, information from handheld devices (e.g., smart phones) may be used to provide inputs and location for heat map generation.

In one example, the wireless communication signal strength may be measured at the EOT position. The communication heat map may be created based on the inputs and location measured at the EOT position. The controller may record all the measured wireless signal characteristics, the locations where the wireless signal characteristics were measured, the heading direction of the vehicle, as well as the times when the wireless signal characteristics were measured. In one example, the measured wireless signal characteristics may include a cellular communication signal. The controller may continuously update and modify the communication heat map based on the received inputs. This may create the most up-to-date and thus accurate reflection of the communication signal strengths along a given route as well as the communication strength between the HOT and EOT along the route. The more inputs and locations the controller may have access to, the more thorough and accurate the communication heat map may be. Additionally, where the first vehicle system and the second vehicle system may travel along the same route and record inputs at the same locations, the controller can compare the inputs to confirm the signal reading was accurate.

When the controller may receive conflicting inputs indicative of signal strength at the same location, the controller may send a notification of the discrepancy and/or may evaluate other factors that may lead to the conflicting inputs indicative of signal strength. For example, the conflicting inputs may be the result of a weather event, an intentional or unintentional interference device on or near the route, unexpectedly high volume, or the like. The controller may send the notification to an employee or a remote server that may review and analyze the discrepancy and may cross-reference with known disturbance events, such as weather events. The employee or remote server may generate a report based on the analysis. The employee or remote server may then send a notification and or the report to subsequently travelling systems to alert them of the unexpected communication signal strength in the given area.

The communication monitoring system may also include determining a forecasted change in a weather condition in the different areas along the route. The communication heat map may update the spatial distribution of the wireless communication signal strength based on the forecasted change in the weather condition. Additionally, based on the forecasted weather change, the operation of the second system may be changed as well. For example, if the forecasted whether condition for a given area is heavy cloud cover that may impact communication, the controller may update the communication heat map for the time(s) at which the adverse weather event may be expected.

The communication monitoring system may monitor present and historical weather conditions in the different areas along the route. The controller may cross-reference the wireless communication signal strengths with changes in the weather conditions to more accurately reflect the wireless communication signal strength. For example, the controller may receive an input indicative of a weak wireless communication signal strength at a location X at a time Y, but the controller may have received an input indicative of a strong wireless communication signal strength at location X at a time Z. Based on the historical and present monitoring of the weather, the controller may determine that the weak wireless communication signal strength at time Y was the result of a weather event, such heavy cloud cover or rain.

In one embodiment, a method is provided that may include receiving wireless communication signal strengths measured in different areas from one or more communication devices disposed onboard a first system moving through the different areas or stationary communication devices at wayside locations in the different areas. The method may include receiving locations where the wireless communication signal strengths were measured and determining a spatial distribution of the wireless communication signal strengths that were measured and the locations where the wireless communication signal strengths were measured. In one example, the wireless communication signal strengths may be measured at an EOT position and compared to the wireless communication signal strength measured at a HOT position. The method may include changing operation of at least a second system based on the spatial distribution that may be determined.

The method may include measuring the wireless communication signal using the vehicle communication devices disposed onboard the first vehicle systems while the first vehicle systems move through the different areas. The wireless communication signal may also be measured using stationary communication devices at wayside locations. The signal strengths may be measured as the values of one or more of a radio receive signal strength indicator, an ambient noise floor level, a number of repeated wireless messages, a reference signal received power, a reference signal received quality, or a number of repeated use of a wireless communication repeater.

The operation of the second vehicle system may be changed in a variety of ways. The operation may be changed such that the second vehicle system may be directed to store data measured during movement through one or more of the areas associated with decreased levels of the signal strength. The second vehicle may be directed to delay communicating data that may be measured until the second vehicle exits the areas associated with decreased levels of signal strength. Additionally, the second vehicle system may change which wireless communication modality may be used during movement through areas with decreased levels of signal strength relative to the wireless communication modality used by the second system during movement of the second system outside the one or more of the areas associated with the decreased levels of the wireless communication signal strengths. The wireless communication modality may be a wireless communication frequency, a wireless communication channel, or a wireless communication band. The wireless communication modality may be a wireless communication mode. The second vehicle system may also reduce an upper limit on moving speed when travelling through areas with decreased levels of signal strength.

In one example, changing the operation of the second system may include changing a pressure of a brake system onboard the second system one or more of prior to or during movement of the second system in one or more of the areas associated with decreased levels of the wireless communication signal strengths. Changing the operation of the second system may include reducing an upper limit on a moving speed at which the second system may be permitted to move during movement of the second system in one or more of the areas associated with decreased levels of the wireless communication signal strengths.

The operation of the one or more of the stationary communication devices that may be changed may include restricting one or more of moving speeds or a permissible size of the second system during movement of the second system in one or more of the areas associated with decreased levels of the wireless communication signal strengths. The operation of the stationary communication devices may be modified based on the determined spatial distribution. The stationary communication devices may be restarted or replaced based on the determined spatial distribution. The stationary communication devices may be modified to restrict the moving speed or permissible size of the second vehicle system during movement through the areas associated with decreased levels of signal strength.

The method may also include determining a forecasted change in a weather condition of the different areas along the route. The spatial distribution may be updated based on the forecasted weather condition. The method may also include matching changes in the signal strengths with changes in the weather conditions and modifying the spatial distribution and operation of the second vehicle system accordingly.

The method may include monitoring weather conditions in the different areas over time. The method may include matching changes in the wireless communication signal strengths with changes in the weather conditions that may be monitored. The spatial distribution of the wireless communication signal strengths may be determined based on the values of the wireless communication signal strengths that were measured, the locations where the wireless communication signal strengths were measured, and the changes in the weather conditions. The operation of the second system may be changed based on the spatial distribution that may be determined and a weather condition in which the second system may travel through.

In one example, the method may include recording the measured wireless communication signal strengths, the location where the wireless communication signal strengths were measured, and a time when the wireless communication signal strengths were measured. The method may include transmitting the recorded information and the changing operation of the at least second vehicle system to a remote server. The remote server may analyze historical recorded information and may generate one or more reports based on the analysis.

The method may include measuring the wireless communication signal strength at an end of train (EOT) position and determining the spatial distribution of the wireless communication signal strengths based on values of the wireless communication signal strengths measured at the EOT position.

In one embodiment, a system is provided that may include a controller. The controller may receive wireless communication signal strengths measured in different areas. The signal strengths may be measured from a first communication device disposed onboard a first vehicle system while the first vehicle system is moving through different areas or measured by stationary communication devices at wayside locations in the different areas. The controller may receive locations where the wireless communication signal strengths were measured and may determine a spatial distribution of the wireless communication signal strengths based on values of the wireless communication signal strengths that were measured and the locations where the wireless communication signal strengths were measured. The controller may change operation of a second vehicle system based on the spatial distribution that may be determined.

In one embodiment, a method is provided that may include receiving wireless communication signal strengths measured in different areas from one or more communication devices disposed onboard a first vehicle system moving through the different areas or stationary communication devices at wayside locations in the different areas. The method may include receiving locations where the wireless communication signal strengths were measured. The method may include determining a spatial distribution of the wireless communication signal strengths based on values of the wireless communication signal strengths that were measured and the locations where the wireless communication signal strengths were measured. The method may include changing operation of a second vehicle system based on the spatial distribution that is determined.

In one embodiment, a system is provided that may include a first system, a second system, and a controller. The first system includes a first communication device. The second system includes a second communication device. The controller may receive wireless communication signal strengths measured in different areas from the first communication device disposed onboard the first system while the first system may be moving through different areas or measured by stationary communication devices at wayside locations in the different areas. The controller may receive locations where the wireless communication signal strengths were measured and determine a spatial distribution of the wireless communication signal strengths based on the values of the wireless communication signal strengths that were measured and the locations where the wireless communication signal strengths were measured. The controller may change operation of the second system based on the spatial distribution that may be determined.

In one embodiment, the monitoring_system may have a local data collection system deployed that may use machine learning to enable derivation-based learning outcomes. The controller may learn from and make decisions on a set of data (including data provided by the various sensors), by making data-driven predictions and adapting according to the set of data. For example, the controller can use artificial intelligence or machine learning to examine signal strengths and associated locations where the signal strengths were measured for identifying or predicting areas where communication may be likely to be poor and/or wayside repeaters are needed. The output from the controller (e.g., the areas that are identified based on signal strengths and locations) can be examined and compared to additional measurements to determine if those areas do, in fact, have reduced signal strengths. Based on this comparison, differences between the output from the controller and the actual measured signal strengths (e.g., differences in areas where signal strengths are calculated or predicted to be poor versus areas where the signal strengths actually were poor) can be identified. These differences can then be used to train the monitoring system (e.g., via back-propagation or other machine learning training techniques). This process of inputting data, receiving output, comparing the output to measurements, and using differences between the outputs and measurements to train the monitoring system can be repeated to improve the ability of the monitoring system to predict areas where communication may be poor over time. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for vehicle performance and behavior analytics, and the like.

In one embodiment, the control system may include a policy engine that may apply one or more policies. These policies may be based at least in part on characteristics of a given item of equipment or environment. With respect to control policies, a neural network can receive input of a number of environmental and task-related parameters. These parameters may include an identification of a determined trip plan for a vehicle group, data from various sensors, and location and/or position data. The neural network can be trained to generate an output based on these inputs, with the output representing an action or sequence of actions that the vehicle group should take to accomplish the trip plan. During operation of one embodiment, a determination can occur by processing the inputs through the parameters of the neural network to generate a value at the output node designating that action as the desired action. This action may translate into a signal that causes the vehicle to operate. This may be accomplished via back-propagation, feed forward processes, closed loop feedback, or open loop feedback. Alternatively, rather than using backpropagation, the machine learning system of the controller may use evolution strategies techniques to tune various parameters of the artificial neural network. The controller may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models are obtained, they may be evaluated on their performance using a determined success metric. The best model may be selected, and the vehicle controller executes that plan to achieve the desired input data to mirror the predicted best outcome scenario. Additionally, the success metric may be a combination of the optimized outcomes, which may be weighed relative to each other.

As used herein, an element or step recited in the singular and proceeded with the word "a" or "an" do not exclude the plural of said elements or operations, unless such exclusion is explicitly stated. Furthermore, references to "one embodiment" of the invention do not exclude the existence of additional embodiments that incorporate the recited features. Moreover, unless explicitly stated to the contrary, embodiments "comprising," "comprises," "including," "includes," "having," or "has" an element or a plurality of elements having a particular property may include additional such elements not having that property. In the appended claims, the terms "including" and "in which" are used as the plain-English equivalents of the respective terms "comprising" and "wherein." Moreover, in the following clauses, the terms "first," "second," and "third," etc. are used merely as labels, and do not impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function devoid of further structure.

The above description is illustrative, and not restrictive. For example, the above-described embodiments (and/or aspects thereof) may be used in combination with each other. In addition, many modifications may be made to adapt a particular situation or material to the teachings of the subject matter without departing from its scope. While the dimensions and types of materials described herein define the parameters of the subject matter, they are exemplary embodiments. Other embodiments will be apparent to one of ordinary skill in the art upon reviewing the above description. The scope of the subject matter should, therefore, be determined with reference to the appended claims, along with the full scope of equivalents to which such clauses are entitled.

This written description uses examples to disclose several embodiments of the subject matter, including the best mode, and to enable one of ordinary skill in the art to practice the embodiments of subject matter, including making and using any devices or systems and performing any incorporated methods. The patentable scope of the subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A method comprising:
receiving wireless communication signal strengths measured in different areas from one or more communication devices disposed onboard a first system moving through the different areas or stationary communication devices at wayside locations in the different areas;
receiving locations where the wireless communication signal strengths were measured;
determining a spatial distribution of the wireless communication signal strengths based on values of the wireless communication signal strengths that were measured and the locations where the wireless communication signal strengths were measured; and
changing operation of a second system based on the spatial distribution that is determined.

2. The method of claim 1, wherein the wireless communication signal strengths are measured by the stationary communication devices at the wayside locations.

3. The method of claim 1, wherein the wireless communication signal strengths are measured as the values of one or more of a radio receive signal strength indicator, an ambient noise floor level, a number of repeated wireless messages, a reference signal received power, a reference signal received quality, or a number of repeated use of a wireless communication repeater.

4. The method of claim 1, wherein changing the operation of the second system includes:
directing the second system to store data measured during movement of the second system through one or more of the areas associated with decreased levels of the wireless communication signal strengths; and
directing the second system to delay communicating the data that is measured until the second system exits the one or more of the areas associated with the decreased levels of the wireless communication signal strengths.

5. The method of claim 1, wherein changing the operation of the second system includes directing the second system to delay communicating one or more wireless messages while moving in one or more of the areas associated with decreased levels of the wireless communication signal strengths until the second system exits the one or more of the areas associated with the decreased levels of the wireless communication signal strengths.

6. The method of claim 1, wherein changing the operation of the second system includes changing which wireless communication modality is used by the second system during movement of the second system within one or more of the areas associated with decreased levels of the wireless communication signal strengths relative to the wireless communication modality used by the second system during movement of the second system outside the one or more of the areas associated with the decreased levels of the wireless communication signal strengths.

7. The method of claim 6, wherein the wireless communication modality is one or more of a wireless communication frequency, a wireless communication channel, or a wireless communication band.

8. The method of claim 7, wherein the wireless communication modality is a wireless communication mode.

9. The method of claim 1, wherein changing the operation of the second system includes changing a pressure of a brake system onboard the second system one or more of prior to or during movement of the second system in one or more of the areas associated with decreased levels of the wireless communication signal strengths.

10. The method of claim 1, wherein changing the operation of the second system includes reducing an upper limit on a moving speed at which the second system is permitted to move during movement of the second system in one or more of the areas associated with decreased levels of the wireless communication signal strengths.

11. The method of claim 1, wherein the operation of the one or more of the stationary communication devices that is changed includes restricting one or more of moving speeds or a permissible size of the second system during movement of the second system in one or more of the areas associated with decreased levels of the wireless communication signal strengths.

12. The method of claim 1, further comprising:
determining a forecasted change in a weather condition in one or more of the different areas; and
updating the spatial distribution of the wireless communication signal strengths based on the forecasted change in the weather condition, the operation of the second system changed based on the spatial distribution that is updated.

13. The method of claim 1, further comprising:
monitoring weather conditions in the different areas over time; and
matching changes in the wireless communication signal strengths with changes in the weather conditions that are monitored, the spatial distribution of the wireless communication signal strengths determined based on the values of the wireless communication signal strengths that were measured, the locations where the wireless communication signal strengths were measured, and the changes in the weather conditions.

14. The method of claim 13, wherein the operation of the second system is changed based on the spatial distribution that is determined and a weather condition in which the second system will travel through.

15. The method of claim 1, further comprising recording the measured wireless communication signal strengths, the location where the wireless communication signal strengths were measured, and a time when the wireless communication signal strengths were measured.
